# EUROPEAN PATENT APPLICATION

(11) **EP 0 598 908 A1**
(43) Date of publication of application: **01.06.1994**
(21) Application number: 93901546.7
(22) Date of filing: 13.01.1993
(51) Int. Cl.: B01D 46/54, B01D 46/02, B01D 39/16, B01D 69/04, B01D 71/36, B01D 46/24, B01D 63/02

(54) **FILTER AND FILTER ELEMENT**

(30) Priority: 14.01.1992 JP 5167/92
(71) Applicant: DAIKIN INDUSTRIES, LTD., Kita-ku, Osaka 530 (JP)
(72) Inventor: YAMAMOTO, Katsutoshi Daikin Industries Ltd., Settsu-shi Osaka 566 (JP); TANAKA, Osamu Daikin Industries Ltd., Settsu-shi Osaka 566 (JP); INOUE, Osamu Daikin Industries Ltd., Settsu-shi Osaka 566 (JP); KUSUMI, Toshio Daikin Industries Ltd., Settsu-shi Osaka 566 (JP); ASANO, Jun Daikin Industries Ltd., Settsu-shi Osaka 566 (JP); URAOKA, Nobuki Daikin Industries Ltd., Settsu-shi Osaka 566 (JP)
(74) Representative: Patentanwälte Beetz - Timpe - Siegfried Schmitt-Fumian - Mayr
(86) International application number: PCT/JP93/00038
(87) International publication number: WO 93/13849

(57) **Abstract**

A filter of small dimensions and a large filtration area, in which one end portion of each of tubular filter elements, each of which is formed by spirally winding a filter medium consisting of a porous film of polytetrafluoroethylene having an average pore diameter of 0.1-5 µm and a small pressure loss and sandwiched by a pair of sheets of fiber of a thermally meltable synthetic resin, is fitted firmly in each of a plurality of through holes in a rigid support plate, the other end portions of these filter elements being closed.

## Description

### Technical Field

The present invention relates to a filter apparatus and filter element for use with the filter apparatus, and more particularly to a filter apparatus preferably provided as an HEPA (High Efficiency Particulate Air), ULPA (Ultra-Low Penetration Air) or super ULPA filter apparatus and a filter element.

### Background Art

Along with recent advance of in scientific technologies and changes of life-style, clean spaces and purified air have been increasingly required. It is natural that purified air is desired in hospitals and homes, and various air cleaners are used. It is also true in precision instrument and food industries. Furthermore, in fabrication of integrated circuits and semiconductors, pharmaceutics and manufacture of such medical products as artificial organs, an allowable dust amount is much less than that in usual clean spaces, and generally an HEPA filter; preferably ULPA filter and more preferably a filter apparatus classified as super ULPA filter are required.

Such a filter apparatus used for air cleaning is adapted to have a filter element consisting of a filter material that is passed through by air to be cleaned to remove dusts therefrom.

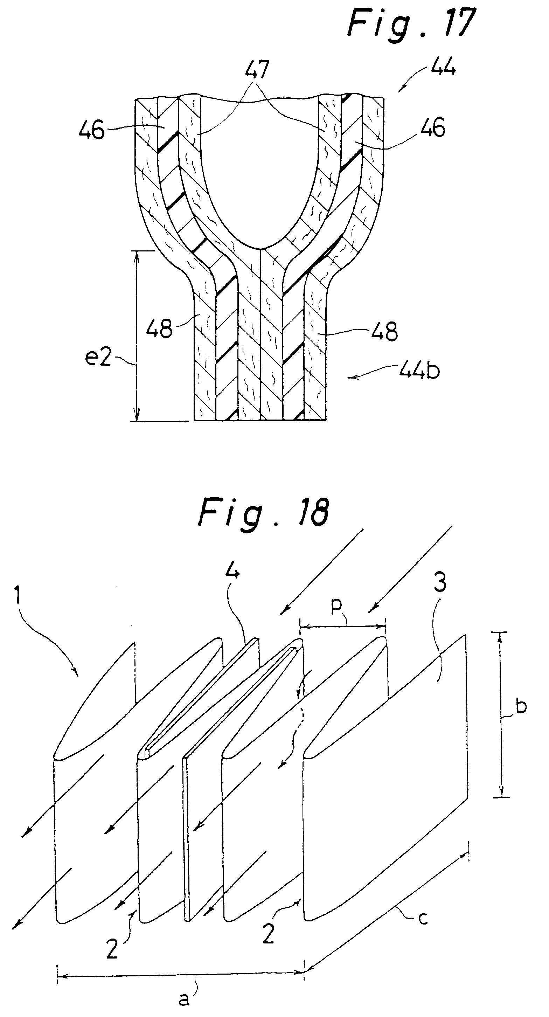

An example of such filter element is illustrated in a perspective view in Fig. 18. A filter element 1 consists of a filter material 3 which is a filter medium bent over so as to form plural ridge parts 2, for example, a filter cloth of fiberglass. Additionally, a spacer 4 is generally placed between the ridge parts in order to uniformly place the filter material (only two spacers of them illustrated). A filter apparatus is formed by air-tightly fitting the circumference of the filter element 1 in a rectangular frame (not shown). The air passing through the filter apparatus flows from the right backward direction of Fig. 18, and passes through the filter material to the left forward. Such a filter element is described, for instance: in pp. 40 to 41 of "Development of high-function filter" (Osaka Chemical Research Series, Vol. 5, No. 9, Osaka Chemical Marketing Center).

A concept of filtration area is one of standards for evaluating the performance of a filter apparatus. More specifically, the performance of a filter apparatus is measured by filtration area for unit volume of a filter element. Generally, for obtaining higher performance with less pressure loss, a filter element having the largest possible filtration area with the smallest possible size is preferred.

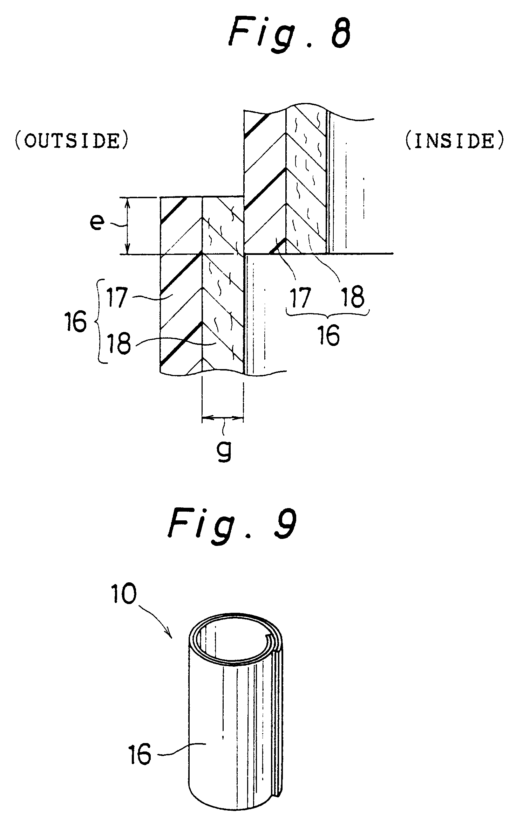

In the filter element 1 of Fig. 18, the total area of filter material 3 corresponds to the filtration area. In order to increase the filtration area of a filter element in such structure to improve the performance of the filter element, a spacing between the ridge parts, that is, a pitch (length p in Fig. 8) is generally reduced to the minimum so that the ridge parts might be formed in wrinkle-like shape.

However, in many cases, reduction of the pitch p is unpreferable, because to reduce the pitch p is limited by flexibility of the material itself, which depends on types of filter materials used, and adjacent filter materials (or, a filter material and separator, when a separator is provided with) may be in contact with each other, when the pitch is excessively reduced, so that an air passage is needlessly narrowed, and that causes the increase of the pressure loss.

For example, in the case that an unwoven fiberglass cloth conventionally applied to an air filter is employed as a filter material, when a filter element in such structure as shown in Fig. 18 is produced by using such unwoven cloth of 0.5 mm in thickness, the limit of the pitch is considered to be about 5 mm. Therefore, with a filter element of 610 mm x 610 mm in frontage (lengths a x b in Fig. 8) and 150 mm in depth (length c of Fig. 18), the filtration area is approximately 16 m².

In addition, when fiberglass is used as a filter material, fine dusts are caused from the fiberglass (Japanese Unexamined Patent Publication No. 3-34967). Thus, it is not an optimum material for obtaining clean air.

Hence, it is an object of the invention to present a filter apparatus and filter element that are compact, present a larger filtration area and less pressure loss, and cause no dusts.

### Disclosure of Invention

The invention presents a filter apparatus comprising a support plate containing multiple through holes and a cylindrical filter element having one end connected to the through hole in the support plate and the other end closed.

The invention also presents a filter apparatus comprising a support plate containing multiple through holes and a cylindrical filter element with both ends thereof connected to the through holes in the support plate.

Additionally, the invention presents a filter element constructed in cylindrical shape comprising:
a porous membrane made of polytetrafluoroethylene having a mean pore diameter of 0.1 to 5 µm and pressure loss of 10 to 200 mmH₂O, when the air is forced to penetrate it at a flow velocity of 5.3 cm/sec; and
a reinforcement sheet having a pore diameter larger than the mean pore diameter of the porous membrane, and fixed in lamination over the porous membrane.

The invention is also characterized in that the reinforcement sheet is formed by fibers made of a thermally melting synthetic resin at least in an outer circumferential surface thereof, and thermally fused to the porous membrane.

The invention is further characterized in that the reinforcement sheet is formed by fibers of core-shell structure comprising a synthetic resin with a low melting point in an outer layer thereof and a synthetic resin with a high melting point in an inner layer.

Moreover, the invention is characterized in that the filter element is spirally wound so that a porous membrane comes in the outside.

The invention additionally presents a filter element comprising:
a porous membrane; and
a sheet made of thermally melting synthetic resin having a pore diameter larger than that of the porous membrane, and fixed over the porous membrane;
wherein the filter element is cylindrically formed in such manner that the sheet comes in the inside, one end in the axial direction thereof is crushed, and the sheet is thermally fused together to form a closed end.

Moreover, the invention presents a filter element comprising:
a porous membrane; and
a pair of sheets made of thermally melting synthetic resin having a pore diameter larger than that of the porous membrane, laminated with the porous membrane in both sides thereof, and fixed so that the membrane is placed between them;
the filter element being cylindrically formed, one end in the axial direction thereof is crushed, and an inner sheet of the pair is thermally fused together to form a closed end.

Furthermore, the invention presents a filter apparatus comprising:
a support plate having multiple through holes therein;
a cylindrical filter element having one end in the axial direction inserted in the through holes in the support plate, and projected in one side in the direction of thickness of the support plate, and the other end in the axial direction projected and extended in the other side in the direction of thickness of the support plate being closed;
a weir being fixed to a surface of said one side in the direction of thickness of the support plate, and surrounding a region where the through holes of the support plate are formed; and
an adhesive filling between the filter elements in the region where the through holes of the support plate are formed.

The invention is still further characterized in that a cylindrical member that is fixed to a surface of said other side in the direction of thickness of the support plate, and surrounds the outside of filter element is provided.

The invention is yet characterized in that a region outside the region where the through holes of the support plate are formed is a mounting flange.

According to the invention, a filter apparatus is constructed by connecting a cylindrical filter element at one end to multiple through holes that are formed in a support plate, and closing the other end of the filter element, or both ends of the cylindrical filter element are connected to the through hole, so that a gas to be filtered is introduced from the through holes, and cleaned as it passes through the filter element, or the gas is drawn through the filter element in the reverse direction, that is, from outside to inside thereof, cleaned, and emitted out of the through holes. Thus, because the filter element is constructed cylindrically, and connected to multiple through holes of the support plate, the entire structure is formed in a compact size, and the filtration area can be increased.

In addition, according to the invention, in the filter element constructed cylindrically, a porous membrane made of polytetrafluoroethylene (PTFE in short) and a reinforcement sheet for enforcing the membrane are fixed in lamination, pores in the membrane have a mean diameter of 0.1 to 5 µm, and the pressure loss, when the air is drawn therethrough at a flow velocity of 5.3 cm/sec, is 10 to 200 mmH₂O, thus, the performance of collecting ultra-fine particles is increased, and the pressure loss can be reduced. Besides, the diameter of such cylindrical filter element is reducible, and a compact size can be realized.

Moreover, according to the invention, as the reinforcement sheet is formed by fibers at least whose outer circumferential surface is made of a thermally melting synthetic resin, thus, it can be thermally fused, and fixed to the porous membrane, the filter element can be formed cylindrically by thermal fusion, and a elongated cylindrical filter element can be automatically fabricated at ease by thermal fusion, particularly by spirally winding it in such manner that the reinforcement sheet consisting of fibers made of such thermally melting synthetic resin comes in the inside, and the porous membrane in the outside to form a cylindrical shape.

Also, according to the invention, the reinforcement sheet is formed by fibers of core-shell structure, of which an outer layer, that is, a skin layer is made of a synthetic resin having a low melting point for enabling thermal fusion, and an inner layer, that is, a core layer a synthetic resin having a high melting point, thus, any shrinkage or deformation of the fibers due to heat during thermal fusion is prevented, and voids that allows gases to pass through can be secured even after the thermal fusion.

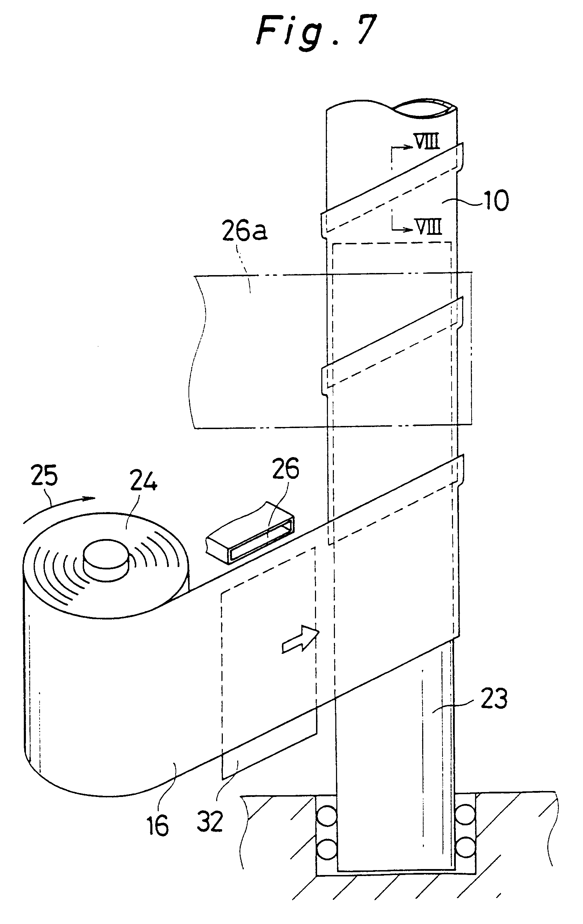

According to the invention, a filter medium of filter element consists of a sheet fixed in lamination with the porous membrane, and the sheet has a pore diameter larger than that of the porous membrane, is made of a thermally melting synthetic resin, and may be formed by an unwoven cloth consisted of fibers, as the sheet is cylindrically formed so as to come in the inside, one end in the axial direction thereof is crushed so that it can be thermally fused together to form a closed end, manufacture of a filter element is facilitated, and the sheet can be used, as described above, for closing said one end by thermal fusion as well as for reinforcement of the porous membrane. Besides, since the sheet is made of a thermally melting synthetic resin, as already described, when the filter element is constructed as shown in Figs. 7 and 8, which will be referred to later, by spirally winding it in such manner that the sheet comes in the inside, that is, the porous membrane in the outside to form a cylindrical shape, or as shown in Fig. 9 possibly by laminating the porous membrane and the sheet, and thermally fusing and fixing, for example, a rectangular filter medium, the manufacture is facilitated, as mentioned.

In addition, a filter medium of other filter element according to the invention has a sandwich structure with a pair of sheets laminated on both sides of a porous membrane, each sheet is made of a thermally melting synthetic resin, and is cylindrically formed, the porous membrane is, therefore, protected by the pair of sheets, and the porous membrane is accordingly protected against such damages as pinholes, for instance, when it is cylindrically formed, and enforced. Moreover, because the sheets in either sides of the porous membrane in the filter medium with the sheets placed on both sides of the porous membrane are thermally fused to the membrane, and cylindrically formed, the adhesive strength can be enhanced. Furthermore, since the sheet inside the filter element that is formed cylindrically is thermally fused, when one end in the axial direction of the filter element is crushed and closed, fabrication can be facilitated, and the porous membrane is protected against damages caused by contacting with a mandrel, when such filter medium is spirally wound, and formed in a cylindrical shape. The sheet outside the filter element that is cylindrically formed avoids the porous membrane from damages due to an external force, and also serves for increasing adhesive strength by being thermally fused to the inner sheet, when it is cylindrically formed as described above.

Also, according to a filter apparatus of the invention, a cylindrical filter element is provided so as to be inserted in multiple through holes formed in the support plate, one end in the axial direction of the filter element is projected in one side in the direction of thickness of the support plate, the filter element is projected and extended in the other side in the direction of thickness of the support plate, the other end in the axial direction of the filter element is closed, a weir is provided in a surface of said one side in the direction of thickness of the support plate, and an adhesive is filled in a region which is surrounded by the weir, thus, the outer circumferential surface of filter element and inner circumferential surface of the through holes are air-tightly adhered and closed, thereby preventing any leakage of gas.

By fixing a cylindrical member to a surface of said other side in the direction of thickness of the support plate, and surrounding the outside of filter element, damages of filter element due to an external force can be prevented.

Moreover, according to the invention, a region outside the region where the through holes of support plate are formed by the weir is a mounting flange, and mounting operation of a filter apparatus of the invention is thereby facilitated.

### Brief Description of Drawings

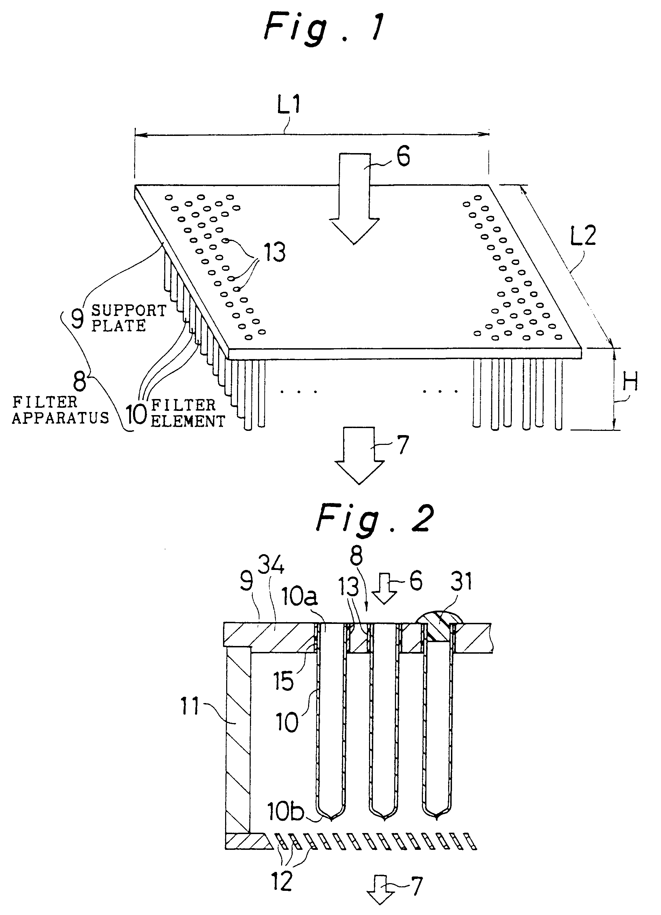

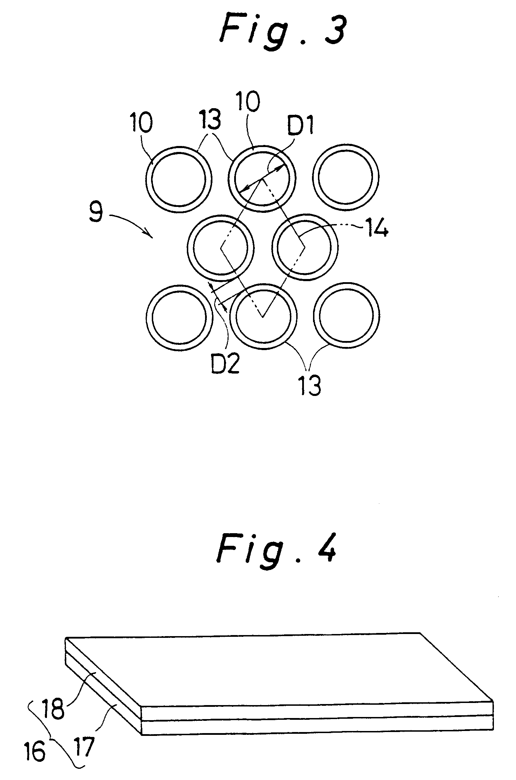

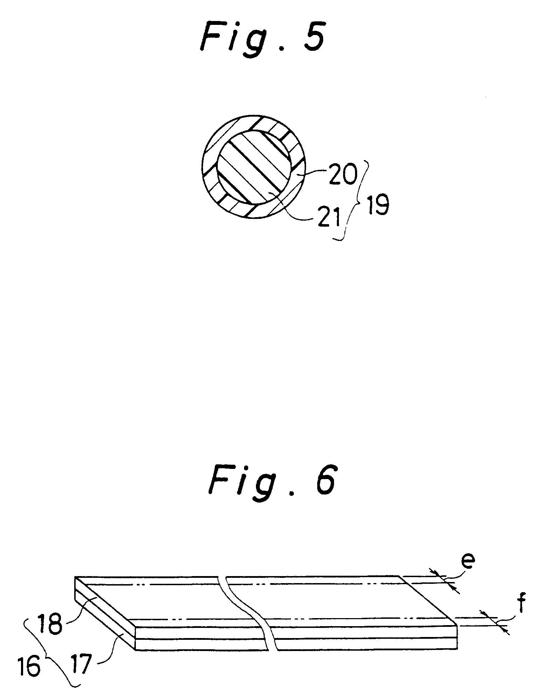

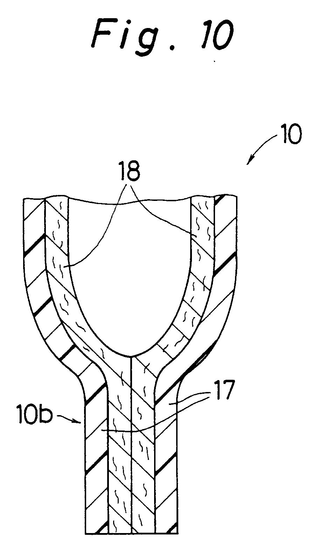

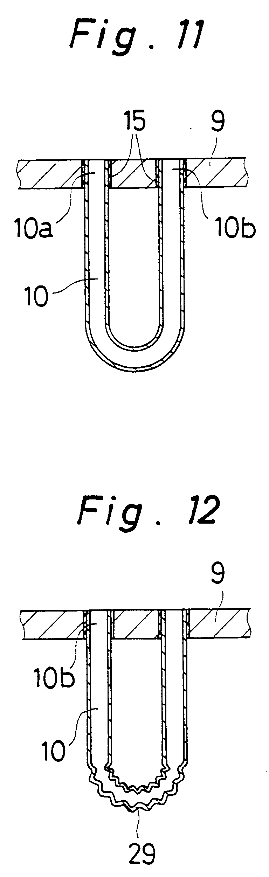

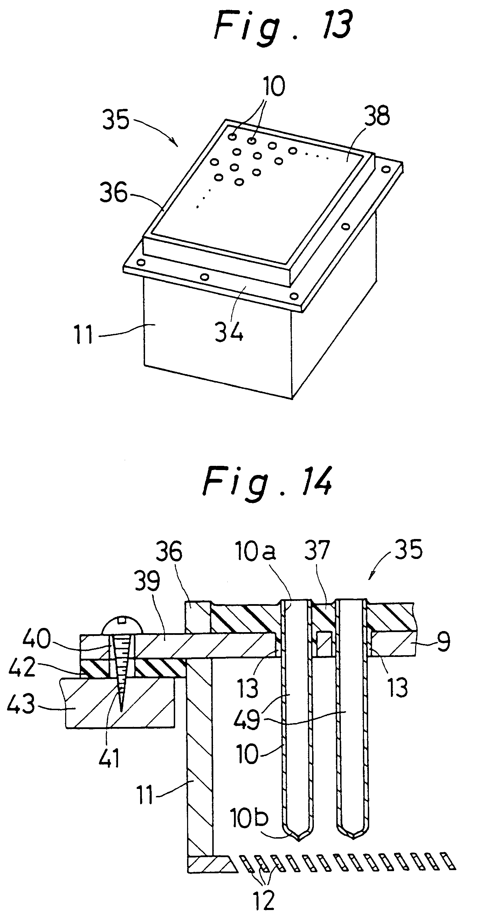

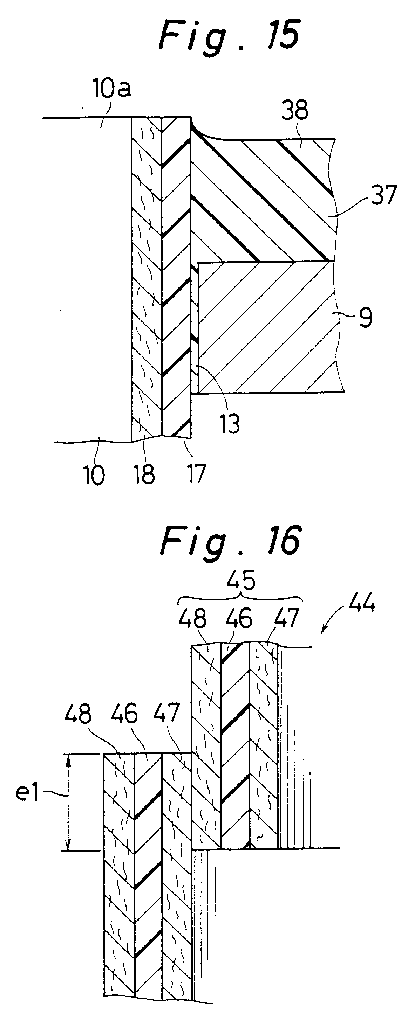

Fig. 1 is a perspective view showing a filter apparatus 8 of an embodiment of the invention; Fig. 2 is a magnified sectional view showing a part of the filter apparatus 8 shown in Fig. 1; Fig. 3 is a plan view of the filter apparatus 8; Fig. 4 is a perspective view showing a filter medium 16 that constitute a filter element 10; Fig. 5 is a sectional view of a fiber having a core-shell structure, and constituting a reinforcement sheet 18; Fig. 6 is a perspective view showing the filter medium 16 for forming the filter element 10 that is constructed by spiral winding; Fig. 7 is a perspective view showing a manufacturing process of the reinforcement sheet 18 by spiral winding; Fig. 8 is a partial sectional view taken along a sectional line VIII-VIII of Fig. 7; Fig. 9 is a perspective view showing a filter element 10 of another embodiment of the invention; Fig. 10 is a magnified view showing an end 10b of the filter element 10; Fig. 11 is a partial sectional view showing a filter apparatus of other embodiment of the invention; Fig. 12 is a partial sectional view showing a filter apparatus of still other embodiment of the invention; Fig. 13 is a perspective view showing overall structure of a filter apparatus 35 of another embodiment of the invention; Fig. 14 is a partial sectional view of the filter apparatus 35 shown in Fig. 13; Fig. 15 is a magnified sectional view showing a section XV of Fig. 14; Fig. 16 is a partial sectional view in correspondence with Fig. 8, showing a filter element 44 of still further embodiment of the invention; Fig. 17 is a magnified sectional view showing an end 44b of the filter element 44 shown in Fig. 16; and Fig. 18 is a perspective view of a part of a prior art.

### Best Mode for Carrying Out the Invention

Fig. 1 is a perspective view of an embodiment of the invention, and Fig. 2 a magnified sectional view showing a part thereof. Such filter apparatus is placed on a ceiling of superclean room, the air to be cleaned is fed as shown by an arrow 6, and the air cleaned is supplied into the room, as shown by an arrow 7, through a filter apparatus 8 according to the invention. The filter apparatus 8 basically contains a rigid support plate 9 and plural filter elements 10. The filter apparatus 8 is supported at a mounting flange 34 provided in the periphery thereof by a protecting frame 11 that is a cylindrical member placed on a ceiling of superclean room, and fixed to the ceiling. In a lower part of the protecting frame 11, a ventilation member 12 is employed for more aesthetic appearance. Although the ventilation member 12 may be constructed with plural fins provided in parallel, it may be constructed by a punching metal or net. The ventilation member 12 may be a sheet or film with plural vents formed therein. By the ventilation member 12, shown by the arrow 7, the air cleaned can be rectified and supplied into the room. The mounting flange 34 is formed outside a region where through holes 13 of the support plate 9 are formed.

The support plate 9 of filter apparatus 8 may be made of such synthetic resins as epoxy, urethane, silicon and acrylic, such metals as aluminum and iron, or any other material. In the support plate 9, plural through holes 13 are formed, as shown in Fig. 3, in a staggered pattern, for instance. For example, inner diameter D1 of the through hole 13 is typically 4 to 5 mm, minimum spacing D2 between adjacent each through holes may be 1 mm, and the axis of each through hole 13 is located at an apex of rhomboid as shown by a virtual line 14. In this embodiment, although the through holes are arranged in staggered pattern, the axis of each through hole 13 may be located at an apex of a square or rectangle as another embodiment of the invention, by arranging them in a staggered pattern as above embodiment, as many through holes as possible are formed in each unit area of the support plate 9, and the filtration area can be increased to the maximum.

According to the invention, the inner diameter of the filter element 10 is, for example, 2 to 20 mm⌀ , preferably 2 to 10 mm⌀ . If the inner diameter of filter element 10 is less than 2 mm⌀, as described hereinafter by referring to Fig. 7, during manufacture by using a mandrel 23, although the mandrel 23 comes to be too thin, and is bent, and it is difficult to accurately manufacture the filter element 10, when a filter medium 16 has a highly flexible structure, it is possible to prevent the bending of the mandrel 23 during the manufacture, and the diameter can be further reduced. If the inner diameter of the filter element 10 exceeds 20 mm⌀, it is difficult to achieve the objects of the invention of obtaining the largest possible filtration area with the smallest possible size.

One end 10a of the filter element 10 is engaged in the through hole 13, and air-tightly fixed thereto by an adhesive 15. The other end 10b of the filter element 10 is, as described hereinafter by referring to Fig. 10, crushed, and closed by means of thermal fusion or the like. Although a vertical length in the axial direction of the filter element 10 in Fig. 2 can be chosen as desired, it is practically, for instance, about 50 mm or more and less than 300 mm. Although the filter element 10 may be longer, since it only means that the structural resistance is increased as an entire filter apparatus, extreme elongation is meaningless. The filter element 10 may be formed to have a shorter length than 50 mm.

The filter element 10 is spirally wound as shown in Fig. 7, which will be referred to hereinafter in the description, and constructed by using a filter medium 16 shown in Fig. 4. The filter medium 16 comprises a porous membrane 17 and a reinforcement sheet 18 that is laminated and fixed with the membrane. The porous membrane 17 is made of such PTFE that has a mean pore diameter of 0.1 to 5 µm, and is capable of providing a pressure loss of 10 to 200 mmH₂O, preferably 10 to 100 mmH₂O, as shown hereinafter in Table 1, when the air is drawn through it at a flow velocity of 5.3 cm/sec.

In a porous membrane made of such PTFE, because a half-cured PTFE is elongated to at least 50 times by expansion area magnification in the biaxial direction, and subjected to a heat treatment at a temperature higher than the melting point of the PTFE, the porous PTFE membrane is dominantly composed of fibril , that is, the area ratio of fibril to node by image processing of scanning electron microscopic picture is 99:1 to 75:25, the mean fibril diameter 0.05 µm to 0.2 µm, the maximum area of node 2 µm² or less, and the mean pore diameter 0.2 to 0.5 µm. By means of such porous membrane made of the PTFE, 99.9995% of dusts of 0.1 µm⌀ or more, for example, can be removed.

As described above, the porous member of half-cured PTFE, which is biaxially elongated at least 50 times, preferably 70 times, and more preferably 100 times by expansion area magnification, and cured, has a unique membrane structure consisting of fine fibers that have almost no node. Moreover, the mean pore diameter of porous PTFE membrane fabricated in this manner is very small, generally 0.5 to 0.2 µm, and the thickness of the membrane is reduced to 1/20 (if the original thickness of half-cured member is 100 µm, it is reduced to 5 µm after elongation and curing) to 1/50 of that of before drawing.

Preferable ranges and particularly preferable ranges of parameters concerning the porous membrane 17 made of PTFE in the invention are listed in Table 1.

**Table 1**

| | Preferable range | Particularly preferable range |
|---|---|---|
| Degree of curing | 0.30-0.80 | 0.35-0.70 |
| Magnification of elongation | MD 2-40 | MD 3-30 |
| | TD 10-100 | TD 15-70 |
| | Total 50-1500 | Total 50-1000 |
| Mean pore diameter | 0.2-0.5 µm | 0.2-0.4 µm |
| Thickness of membrane | 0.5-15 µm | 1-10 µm |
| Fibril/node area ratio | 99/1-75/25 | 99/1-85/15 |
| Mean fibril/diameter | 0.05-0.2 µm | 0.05-0.2 µm |
| Maximum area of node | 2 µm² or less | 0.05-1 µm² |
| Pressure loss | 10-100 mmH₂O | 10-70 mmH₂O |

Although a feasible thickness of porous membrane 17 is within a range shown in Table 1, a feasible range according to the invention is within a range of 0.05 to 100 µm. preferably 0.05 to 10 µm. In addition, although the mean pore diameter is as shown Table 1, a feasible range according to the invention is 0.1 to 5 µm.

Although filter mediums consisting of fiberglass are conventionally known as flat filter mediums, when cylindrical formation of such filter medium of fiber glass is attempted for manufacturing a filter element, the filter medium cannot be smoothly curved, and is angularly bent to form an acute or obtuse angle, resulting in an angular corner. Therefore, it causes dusts, and dust particles contained in the air to be filtered pass through a relatively large spacing in the angular corner without being filtered, thus, cleaning of air comes to be difficult. The filter medium 16 according to the invention is capable of solving such problems.

Methods for measuring the properties are described below.

### Means pore diameter

A mean flow pore diameter (MFP) measured in accordance with a specification of ASTM F-316-86 was regarded as mean pore diameter. Actual measurements were performed by means of Coulter Porometer [manufactured by Coulter Electronics, U.K.].

### Thickness of membrane

By using a membrane thickness gauge model 1D-110MH manufactured by Mitsutoyo Co., Ltd., an entire thickness of five porous membranes laminated was measured, and divided by 5, and a value obtained was regarded as thickness of a membrane.

### Pressure loss

The porous membrane was cut into a circular shape of 47 mm in diameter, set to a filter holder having an effective penetration area of 12.6 cm², and subjected to a pressure of 0.4 kg/cm² in the entrance side, and a pressure loss was measured by a manometer by adjusting the air emitted from the exit side so that the air is allowed to penetrate at a flow velocity of 5.3 cm/sec.

### Degree of curing

A degree of curing of the half-cured PTFE member according to the invention is determined by the following method.

Firstly, a sample of 3.0 ±0.1 mg is weighed and cut from the none-cured PTFE member, and a crystal dissolution curve is obtained by using the sample. Similarly, a sample of 3.0 ±0.1 mg is weighed and cut from the half-cured PTFE, and a crystal dissolution curve is obtained from the sample.

The crystal dissolution curve is recorded by a differential scanning calorimeter (hereinafter "DSC") such as model DSC-50 made by Shimadzu Corporation. The sample of non-cured PTFE is firstly placed in an aluminum pan of DSC, and a heat of dissolution of the non-cured PTFE and that of cured one are measured according to the following procedure.
(1) The sample is heated to 250°C at a heating rate of 50°C/min, and then, from 250°C to 380°C at 10°C/min. A peak point of endothermic curve observed during the process is defined as "melting point of non-cured PTFE" or "melting point of fine PTFE powder".
(2) Immediately after being heated to 380°C, the sample is cooled to 250°C at a cooling rate of 10°C/min.
(3) The sample is heated again to 380°C at a heating rate of 10°C/min. A peak point of endothermic curve observed during the heating process (3) is defined as "melting point of cured PTFE".

Succeedingly, a crystal dissolution curve is recorded with a half-cured PTFE in accordance to the process (1).

Heat of dissolution of non-cured, cured and half-cured PTFEs are proportional to an area between the endothermic curve and baseline, and can be automatically recorded by the model DSC-50 made by Shimadzu Corporation, when an analytic temperature is set.

Then, the degree of curing is calculated by the following equation;

$\text{Degree of curing = (ΔH₁ - ΔH₃)/(ΔH₁ - ΔH₂)}$

wherein ΔH₁ is heat of dissolution of the non-cured PTFE, ΔH₂ heat of dissolution of the cured PTFE: and ΔH₃ heat of dissolution of the half-cured PTFE.

### Image processing

The area ratio of fibril to node, mean fibril diameter and maximum node area were measured by the following method.

A picture of the surface of the porous membrane was taken by a scanning electron microscope (Hitachi model S-4000, evaporation by Hitachi model E1030) (SEM picture. Magnification at 1000 to 5000 times). By inputting the picture to an image processor (Image Command 4198, TVIP-4100 of Ratok Engineering Co., Ltd.), and separating it into node and fibril, an image consisted of nodes only and another image of fibers only were obtained. The maximum node area was obtained by processing the image of nodes only, and the mean fibril diameter was obtained by processing the image of fibrils only (by dividing the total area by 1/2 of the total circumference).

The area ratio of fibril to node was obtained from the ratio of the total area of the fibril image to that of node image.

The reinforcement sheet 18 has a pore diameter larger than the mean pore diameter of porous membrane 17, and is fixed in lamination with the porous membrane 17 by thermal fusion or using an adhesive applied locally. It is preferred that the reinforcement sheet 18 is formed by synthetic fibers having a core-shell structure, and the synthetic fiber 19 comprises, as shown in Fig. 5, an outer layer 20 and an inner layer 21. The outer layer 20 is made of a synthetic resin having a low melting point (for example, in the order of 120°C) for thermal fusion, the inner layer 21 is composed of a synthetic resin having a high melting point for avoiding shrinkage by heat during the thermal fusion and maintaining voids during heating, and they are used in such combinations 1 to 4 as shown in Table 2.

**Table 2**

| Combination of synthetic fibers 19 | Outer layer 20 | Inner layer 21 |
|---|---|---|
| 1 | Polyethylene | Polyester |
| 2 | Polyester having a low melting point | Polyester |
| 3 | Polypropylene | Polyester |
| 4 | Polyethylene | Polypropylene |

The synthetic fibers 19 having the core-shell structure are made into an unwoven or woven cloth. The outer layer 20 has a lower melting point than the inner layer 21, thus, it is an advantage that the porous membrane 17 can be fixed by thermal fusion without using any adhesive. The inner layer 21 has a higher melting point than the outer layer 20, and causes no shrinkage, because the inner layer 21 is unmelted when the outer layer 20 is dissolved by heat. Thus, there is no such risk that fine voids in the reinforcement sheet 18 are blocked.

Figs. 6 and 7 are perspective views for explaining a manufacturing process of the filter element 10. Lengths e and f (in the embodiment, $\text{e = f}$ ) of the end portions in the direction of width of the reinforcement sheet 18 in the filter medium 16 shown in Fig. 6 are spirally wound in thermally fused state as shown in Fig. 7 to form the cylindrical filter element 10. A truly cylindrical mandrel 23 is rotatably provided, as shown in Fig. 7, and a roll 24 of the filter medium 16 is spirally wound around the mandrel 23 with a damping force applied in the direction of arrow 25, during which an outer circumferential surface of the filter medium 16 wound around the mandrel 23 is rotated and driven by an endless belt 26a, hot air is supplied by a nozzle 26 to a region shown in Fig. 6 by the length e in one end in the direction of width of the filter medium 16 from the roll 24, thus, the outer layer 20 of synthetic fibers 19 constituting the reinforcement sheet 18 is dissolved and softened, and the filter element 10 is formed. Due to a difference in friction coefficients, accurately, kinetic friction coefficients of the belt 26a and filter medium 16 that act to the filter medium 16, respectively, the filter element 10 is formed in a spirally wound shape. In other words, because a friction drag generated between the belt 26a and filter medium 16 is higher than that between the mandrel 23 and filter medium 6 wound thereabout, the filter element 10 is formed in the spirally wound shape, and rewound from the mandrel 23.

Fig. 8 is a partial sectional view taken along a sectional line VIII-VIII in Fig. 7. The reinforcement sheet 18 of the filter medium 16 is melted over the length e by hot air jet from the nozzle 26, pressed against the porous membrane 17 by a damping force in the direction of arrow 25 that acts to the roll 24, and fixed by heat and pressure. Because the reinforcement sheet 18 is fixed by heat and pressure over the length e, voids are blocked over the length e, and air-tightness is achieved. Instead of airtightly blocking the voids of the reinforcement sheet 18 over the length e in the direction of width of the filter medium 16 as shown in Fig. 8, the length e may be chosen so as to be larger than the thickness g of the reinforcement sheet 18 (e > g).

In order to allow a filter element 10 to be spirally wound and formed in the above manner, the fusion by heat is enabled by placing the porous membrane 17 in the outside, and the reinforcement sheet 18, therefore, in the inside.

An outer diameter of the mandrel 23 is chosen to be 2 to 20 mm⌀ in correspondence with an inner diameter of the filter element 10. When the inner diameter of filter element 10 is small, the mandrel 23 is bent, thus, processing comes to be difficult, and the filtration area is reduced, when it is large.

In the embodiment shown in Fig. 1, lengths L1 X L2 of the support plate 9 is 610 mm X 610 mm, a length H projecting from the support plate of a filter element 10 constitutes the filter apparatus 8, and the filtration area is approximately 23 m² at a setting of D1 = 4.0 mm, D2 = 1 mm in Fig. 3. Accordingly, it is confirmed that the filtration area is much larger than the filtration area of 16 m² of the prior art described above by referring to Fig. 12.

As shown in Fig. 2, by fitting a cap 31 over the end 10a of the filter element 10, some of multiple filter elements 10 can be selectively closed. In this way, it is possible to close defected filter elements and to obtain a filtration property as desired.

Instead of thermal fusion by hot air jet from the nozzle 26, as another embodiment of the invention, an adhesive may be applied for adhering over a range of the length e.

Fig. 9 is a perspective view partly showing the other embodiment of the invention. Alternatively to the spiral winding, by forming the filter medium 16 in a truly cylindrical shape in the longitudinal direction so as to be perpendicular to the axis of cylinder to be formed, the filter element 10 may be cylindrically formed by means of fixation the through thermal fusion or use of an adhesive.

Fig. 10 is a sectional view showing a part of an end 10b of the filter element 10 in a magnified state. The end in the axial direction of filter element is crushed, and the sheet 18 constituting the inner layer is thermally fused together, and closed air-tightly.

Fig. 11 is a partial sectional view of further embodiment of the invention. In this embodiment, similar to the above one, it is noted that both ends 10a, 10b mutually communicated of the filter element are engaged in the through hole 15 of support plate 9, and fixed thereto by using an adhesive or the like.

Still other embodiment of the invention is shown in Fig. 12. In the embodiment, a bellow-like curved portion 29 is formed so that the filter element 10 can be easily bent.

Fig. 13 is a perspective view showing an entire filter apparatus 35 of an embodiment of the invention, and Fig. 14 is a sectional view showing a part of the filter apparatus 35 in magnified state. The embodiment is similar to that shown in Figs. 1 to 10, and corresponding parts are indicated by same reference numerals. The filter apparatus 35 basically comprises, similarly to the other mentioned above, a support plate 9 having multiple through holes 13, and a cylindrical filter element 10 inserted through the through holes 13. One end 10a in the axial direction of the filter element 10 is inserted through the through hole 13, and projected in one side (upper side of Fig. 14) in the direction of thickness of the support plate 9. The filter element 10 is projected and extended in the other side (lower side of Fig. 14) in the direction of thickness of the support plate 9, and the other end 10b in the axial direction thereof is closed. Detailed structure of the filter element 10 is identical to that of the embodiment stated above.

A weir 36 rectangular in plan view is fixed to a surface of said side (that is, an upper surface in Fig. 14) in the direction of thickness of the support plate 9. The weir 36 is constructed in a frame-like form, surrounding outside of a region 37 in which the through holes 13 of the support plate 9 are formed.

Fig. 15 is a magnified sectional view of a section XV in Fig. 14. In the region 37 surrounded by the weir 36 and having the through holes of the support plate 9 formed therein, an adhesive 38 is applied between the filter elements 10. The adhesive 38 is tightly adhered to the porous membrane 17 that provides an outer layer at the end 10a of the filter element 10, enters into the through holes 13, thereby blocks a spacing between an outer circumferential surface of the porous membrane and an inner circumferential surface of the through hole, and avoids leakage of air to be cleaned from upper side of Fig. 15, consequently allowing the air to be securely drawn into the filter element 10 and filtered. Preferably, the adhesive 38 has such viscosity that prevents it from flowing downward in Fig. 5 out of the spacing between the outer circumferential surface of porous membrane 17 and the inner circumferential surface of the through hole 13 and a so-called thixotropic property (shear rate dependency), and epoxy adhesives, for example, are preferred. Viscosity or thixotropic index of the adhesive 38 should be 290 poise, for example.

In a surface (lower surface in Fig. 14) of the other side in the direction of thickness of the support plate 9, a protection frame 11 that is a cylindrical member is fixed. The protection frame 11 surrounds outside the filter element 10, and protects the filter element 10 by preventing the filter element 10 from damages caused by an external force.

A region outside the region 37 with the through holes of the support plate 9 formed therein, that is, a region outside the weir 36 provides a mounting flange 39. A mounting hole 40 is formed in the flange 39, a bis 41 is inserted through the mounting hole 40, and the filter apparatus 35 of the invention is fixed to a ceiling plate 43 through a gasket 42. The other structures are similar to those of the embodiments described above.

As still other embodiment of the invention, an absorbent may be filled in the filter element 10, as shown by reference numeral 49. The absorbent 49 may be activated carbon powders for deodorization, fibers, absorbents for NOx and SOx, or other absorbents for use of removing gases or fine liquid. By filling an absorbent in the filter element 10 in such manner, undesired gases and fine liquids contained in the air to be cleaned can be removed, and an arrangement for removing them can be simplified. Although an absorbing means is conventionally interposed in a path for recirculating the air of such room as a clean room in order to absorb such undesired gases and liquids, it causes such a problem that the arrangement comes to be bulky. By filling the absorbent 4 in the filter element 10 as described above, the problem can be solved, and the arrangement can be simplified.

Fig. 16 is a sectional view showing a part of a filter element 44 of the other embodiment according to the invention, and the figure is in correspondence with Fig. 8 of the embodiment mentioned above. A filter medium 45 comprises a porous membrane 46, an inner sheet 47 and an outer sheet 48 that are overlaid on the porous membrane 46 in both sides thereof and fixed to form a sandwich structure. The porous membrane 46 has a similar structure to the porous membrane 17, and the sheets 47 and 48 have similar structures to the sheet 18. That is, the sheet 47 and 48 have a pore diameter larger than that of the porous membrane 46, and is made of thermally melting synthetic resins. The filter medium 45 is spirally wound, and cylindrically formed by a manufacturing method similar to that shown in Fig. 7. In Fig. 16, the inner sheet 47 and the outer sheet 48 of the filter medium 45 are adhered by heat and pressure over a length e1 in the axial direction. voids over a portion of the length e1 are obstructed, and air-tightness is achieved.

According to the filter element 44 shown in Fig. 16, as the porous membrane 46 is arranged to be present between the sheets 47 and 48, the membrane 46 is protected against damages such as pin holes. In addition, since the inner sheet 47 and outer sheet 48 are fused together by heat over the length e1, as described above, the superior effect of enhancement of adhesive strength can be also achieved. This is also true in such structure that the filter medium 45 is partly overlapped and fused by heat so as to form a cylindrical shape as shown in Fig. 9. Thus, specifically the outer sheet 48 protects the porous membrane 46 against damages due to an external force, and serves for increasing the adhesive strength upon thermal fusion with the inner sheet 47 as shown in Fig. 16.

Fig. 17 is a sectional view showing a lower end 44b of the filter element 44 that is thus formed in a cylindrical shape. The end 44b of filter element 44 is crushed, and the inner sheet 47 of the pair of sheets 47 and 48 is thermally fused together to air-tightly close over a length e2. In this way, the inner sheet 47 carries out the effect of thermal fusion for air-tightly closing the end 44b, and serves for protecting the porous membrane 46, preventing the porous membrane 46 from directly contacting with the mandrel 23 and being damaged, when the filter element 44 is spirally wound and formed in a cylindrical shape by using the mandrel 23 as described specifically in connection with Fig. 7.

In the filter element 44 shown in Figs. 16 and 17, the porous membrane 46 may have a thickness of 10 to 100 µm, particularly when the thickness of the porous membrane 46 exceeds, for example, 100 µm, the outer sheet 48 can be eliminated, and the filter element comes to have a structure similar to that of the filter element 10 of the previous embodiment, when the sheet 48 is eliminated. The inner sheet 47 and outer sheet 48 may be 0.10 mm to 0.50 mm in thickness, respectively, for instance the inner sheet 47 is 0.26 mm thick, and the outer sheet 48 is 0.16 mm thick.

In the embodiment shown in Figs. 16 and 17, similarly to the previous embodiment, the absorbent 48 may be applied in the filter element 44.

As another embodiment of the invention, a porous membrane having the other structure may be used alternatively to the porous membrane 17 consisted of PTFE. For example, it may be an electret membrane consisting of polypropyrene fibers.

The filter element 44 shown in Figs. 16 and 17 can be employed in place of the filter element of Figs. 1 to 15.

According to the concept of the invention, it is required that the sheets 18, 47 and 48 of the filter elements 10 and 44 are composed of a thermally melting synthetic resin at least in the outer circumferential surface, and the inside thereof may consist of other materials than thermally melting synthetic resins.

### Industrial Utilizations

As described above, according to the invention, since the filter apparatus is achieved by connecting cylindrical filter elements to multiple through holes formed in the support plate, it is possible to increase the filtration area with a compact construction, and enable filtering at a low pressure loss.

In addition, according to the invention, the filter element constructed in a cylindrical form has a very small pore diameter, and is arranged so as to enforce the porous membrane with a low pressure loss by the reinforcement sheet, and it is, therefore, possible to enhance the performance of collecting superfine particles, reduce the pressure loss, and avoid dusts emission.

Moreover, according to the invention, the reinforcement sheet is composed of fibers comprising thermally melting synthetic resin at least in the outer circumferential surface, thus, a filter element can be easily constructed in a cylindrical form, and an elongated filter element can be easily manufactured specifically by placing the porous membrane in the outside and the reinforcement sheet, therefore, in the inside, spirally winding them, and producing in a cylindrical form.

Furthermore, according to the invention, the reinforcement sheet is formed by fibers of core-shell structure in such manner that the outer layer is made of a synthetic resin having a low melting point, and the inner layer a synthetic resin having a high melting point, any shrinkage and undesired change in shape of fibers in the reinforcement sheet during thermal fusion are thereby prevented, and the filter element can be cylindrically formed with voids in the reinforcement sheet being maintained.

Also, according to the invention, because the filter medium is constructed by laminating and fixing the sheets made of a thermally melting synthetic resin with the porous member, and formed cylindrically in such manner that the sheet comes inside, and one end in the axial direction is crushed, thermally fused, and closed, the porous membrane is protected by the sheets against damages, thermal fusion is enabled by the sheet, and production is facilitated.

Additionally, according to the invention, a pair of sheets are placed over the porous membrane in both sides thereof to form a sandwich structure, the sheets are composed of thermally melting synthetic resins, and formed cylindrically, an inner sheet of the pair is fused together by heat for blocking by crushing one end in the axial direction thereof, the porous membrane is thus protected by the pair of sheets, and prevented from being damaged, the sheets forming the inner and outer layers can be thermally fused at the time of cylindrical formation, the adhesive strength can be increased, the sheet forming the inner layer is specifically required for blocking by thermal fusion of one end in the axial direction of the filter element, it serves for protecting the porous membrane by preventing it from being damaged by a mandrel, when they are spirally wound and cylindrically formed by using the mandrel, and the sheet forming the outer layer protects the porous membrane by preventing it from being damaged by an external force and serves for increasing the adhesive strength by being fused with the inner sheet during such cylindrical formation as described above.

Still, according to the invention, one end in the axial direction of multiple cylindrical filter element is respectively inserted through the through hole in the support plate, and projected in one side in the direction of thickness of the support plate, the filter element is projected and extended in the other side in the direction of thickness of the support plate, the other end in the axial direction thereof is blocked, the weir is provided in a surface of said one end in the direction of thickness of the support plate so as to surround outside a region with the through holes of the support plate formed therein, an adhesive is filled in the region surrounded by the weir, the outer circumferential surface of the filter element and inner circumferential surface of the through hole in the support plate are, therefore, air-tightly clamped, and prevention of leakage and flow of air to be cleaned toward the downstream is assured.

Moreover, in the filter apparatus, a cylindrical member is fixed to a surface of said other side in the direction of thickness of the support plate so as to surround outside the filter element, and a damage of filter element due to an external force is thereby securely prevented. Furthermore, a region outside the region where the through holes of the support plate are formed, that is, a region outside the weir forms a mounting flange, and attachment of the filter apparatus according to the invention to a ceiling and other places is thus facilitated.

## Claims

1. A filter apparatus comprising:
a support plate containing multiple through holes; and
a cylindrical filter element having one end connected to the through holes in the support plate and the other end closed.

2. A filter apparatus comprising:
a support plate containing multiple through holes; and
a cylindrical filter element with both ends thereof connected to the through holes in the support plate.

3. A filter element constructed in cylindrical shape comprising:
a porous membrane made of polytetrafluoroethylene having a mean pore diameter of 0.1 to 5 µm and pressure loss of 10 to 200 mmH₂O, when the air is forced to penetrate it at a flow velocity of 5.3 cm/sec; and
a reinforcement sheet having a pore diameter larger than the mean pore diameter of the porous membrane, and fixed in lamination over the porous membrane.

4. A filter element according to claim 3, wherein the reinforcement sheet is formed by fibers made of a thermally melting synthetic resin at least in an outer circumferential surface thereof, and thermally fused to the porous membrane.

5. A filter element according to claim 4, wherein the reinforcement sheet is formed by fibers in core-shell structure comprising a synthetic resin with a low melting point in an outer layer thereof and a synthetic resin with a high melting point in an inner layer.

6. A filter element according to claim 3, wherein the filter element is spirally wound so that a porous membrane comes in the outside.

7. A filter element comprising:
a porous membrane; and
a sheet made of thermally melting synthetic resin having a pore diameter larger than that of the porous membrane, and fixed over the porous membrane;
the filter element being cylindrically formed in such manner that the sheet comes in the inside, one end in the axial direction thereof is crushed, and the sheet being thermally fused together to form a closed end.

8. A filter element comprising:
a porous membrane; and
a pair of sheets made of thermally melting synthetic resin having a pore diameter larger than that of the porous membrane, laminated with the porous membrane in both sides thereof, and fixed so that the membrane is placed between them;
the filter element being cylindrically formed, one end in the axial direction thereof is crushed, and an inner sheet of the pair being thermally fused together to form a closed end.

9. A filter apparatus comprising:
a support plate having multiple through holes therein;
a cylindrical filter element having one end in the axial direction inserted in the through holes in the support plate, and projected in one side in the direction of thickness of the support plate, and the other end in the axial direction projected and extended in the other side in the direction of thickness of the support plate being closed;
a weir fixed to a surface of said one side in the direction of thickness of the support plate, and surrounds a region where the through holes of the support plate are formed; and
an adhesive filling between the filter elements in the region where the through holes of the support plate are formed.

10. A filter apparatus according to claim 9, wherein a cylindrical member that is fixed to a surface of said other side in the direction of thickness of the support plate, and surrounds the outside of filter element is provided.

11. A filter apparatus according to claims 1, 2 or 9, wherein a region outside the region where the through holes of the support plate are formed is a mounting flange.
